# EUROPEAN PATENT APPLICATION

(11) **EP 4 371 713 A1**
(43) Date of publication of application: **22.05.2024**
(21) Application number: 23209171.0
(22) Date of filing: 10.11.2023
(51) Int. Cl.: B25J 9/10, B25J 19/00

(54) **PARALLELOGRAM ROBOTIC ARM WITH MOTOR AS BALANCING COUNTERWEIGHT**

(30) Priority: 18.11.2022 JP 2022184670
(71) Applicant: Seiko Epson Corporation, Tokyo 160-8801 (JP)
(72) Inventor: NAKANISHI, Daisuke, Suwa-shi, Nagano, 392-8502 (JP); UNNO, Yukihiro, Suwa-shi, Nagano, 392-8502 (JP); KIKUCHI, Takayuki, Suwa-shi, Nagano, 392-8502 (JP)
(74) Representative: MERH-IP Matias Erny Reichl Hoffmann Patentanwälte PartG mbB

(57) **Abstract**

A robot includes a base, a first arm coupled to the base so as to be rotatable about a first rotation axis along a horizontal direction, a second arm includes the proximal end portion being coupled to the first arm so as to be rotatable about a second rotation axis, which is parallel to the first rotation axis, a first drive source including a first output shaft for outputting rotational force for rotationally driving the first arm, a second drive source including a second output shaft for outputting rotational force for rotationally driving the second arm, and a linkage mechanism that is coupled to a distal end side of the first arm via a plurality of links with a proximal end side of the first arm as a starting point and that transmits rotational force generated by the second drive source to the second arm, wherein when viewed from the vertical direction, the first rotation axis is located between the distal end portion of the second arm and at least one of a centroid G1 of the first drive source or a centroid G2 of the second drive source.

## Description

The present application is based on, and claims priority from JP Application Serial Number 2022-184670, filed November 18, 2022, the disclosure of which is hereby incorporated by reference herein in its entirety.

### BACKGROUND

### 1. Technical Field

The present disclosure relates to a robot.

### 2. Related Art

In recent years, due to an increase in labor costs and a shortage of human resources in a factory, operations such as manufacturing, processing, and assembly have been performed using robots having robot arms, and automation of operations that have been performed manually has been attempted. In particular, work such as loading and unloading of loads is performed by a palletizer robot instead of manually.

For example, the palletizer robot described in JP-A2006-315178 comprises a drive mechanism, a plurality of arms rotatably coupled to each other, and link members rotatably coupled to each other for transmitting the power of the drive mechanism to each arm.

In the palletizer robot described in the JP-A-2006-315178, a counterweight member as a weight is provided to reduce a load applied to the drive mechanism under the influence of gravity and to balance the weight of the entire robot. The counterweight member is mounted on the base.

However, in such a configuration, in consideration of the overall stability, it is necessary to make the counterweight member heavy to some extent. That is, it is necessary to increase the weight of the counterweight member or set the length of the coupling section for supporting the counterweight member sufficiently long. For this reason, there is a problem that an increase in the size of the entire palletizer robot is caused.

### SUMMARY

A robot, according to an aspect of the present disclosure, includes a base, a first arm coupled to the base so as to be rotatable about a first rotation axis along a horizontal direction, a second arm including a distal end portion and a proximal end portion, the proximal end portion being coupled to the first arm so as to be rotatable about a second rotation axis, which is parallel to the first rotation axis, a first drive source including a first output shaft for outputting rotational force for rotationally driving the first arm, a second drive source including a second output shaft for outputting rotational force for rotationally driving the second arm, and a linkage mechanism that is coupled to a distal end side of the first arm via a plurality of links with a proximal end side of the first arm as a starting point and that transmits rotational force generated by the second drive source to the second arm, wherein when viewed from the vertical direction, the first rotation axis is located between the distal end portion of the second arm and at least one of a centroid G1 of the first drive source or a centroid G2 of the second drive source.

### BRIEF DESCRIPTION OF THE DRAWINGS

FIG. 1 is a diagram showing overall configuration of a robot according to a first embodiment of the present disclosure.
FIG. 2 is a diagram showing operations of a robot arm and a linkage mechanism included in the robot shown in FIG. 1.
FIG. 3 is a diagram showing operations of a robot arm and a linkage mechanism included in the robot shown in FIG. 1.
FIG. 4 is a sectional view taken along the line A-A in FIG. 1.
FIG. 5 is a pattern diagram showing the positional relationship between the first rotation axis and the centroid G1' and G2' of the first and second drive sources in the structure of the robot according to the related art.
FIG. 6 is a pattern diagram showing a positional relationship between the first rotation axis and the centroid G1 and G2 of the first and second drive sources in the structure of the robot of the present disclosure.
FIG. 7 is a sectional view corresponding to the sectional view taken along the line A-A in FIG. 1 in the second embodiment of the robot according to the present disclosure.
FIG. 8 is a sectional view corresponding to the sectional view taken along the line A-A in FIG. 1 in the third embodiment of the robot according to the present disclosure.
FIG. 9 is a pattern diagram showing the positional relationship between the first rotation axis and the centroid G1 and G2 of the first and second drive sources in the structure of the robot shown in FIG. 8.

### DESCRIPTION OF EMBODIMENTS

Hereinafter, a robot of the present disclosure will be described in detail based on a preferred embodiment shown in the accompanying drawings.

### FIRST EMBODIMENT

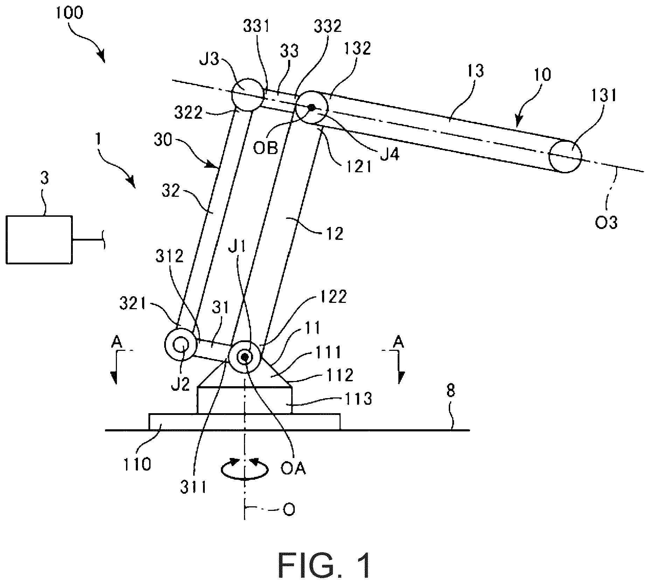

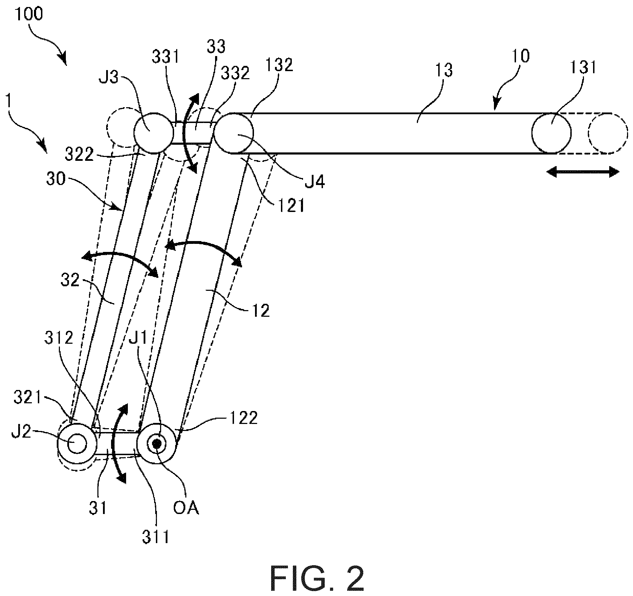

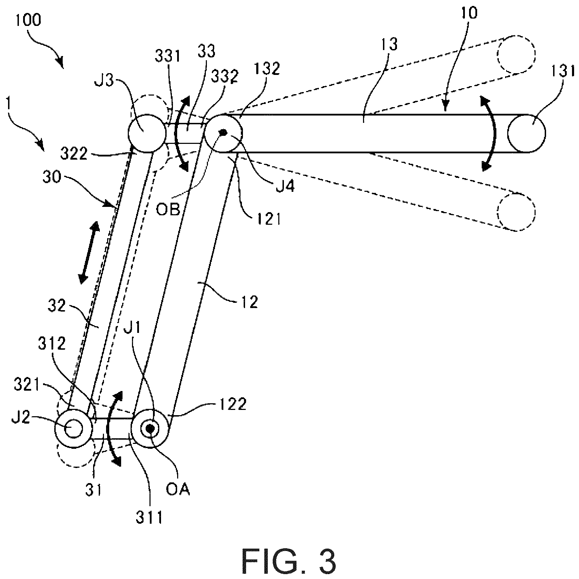

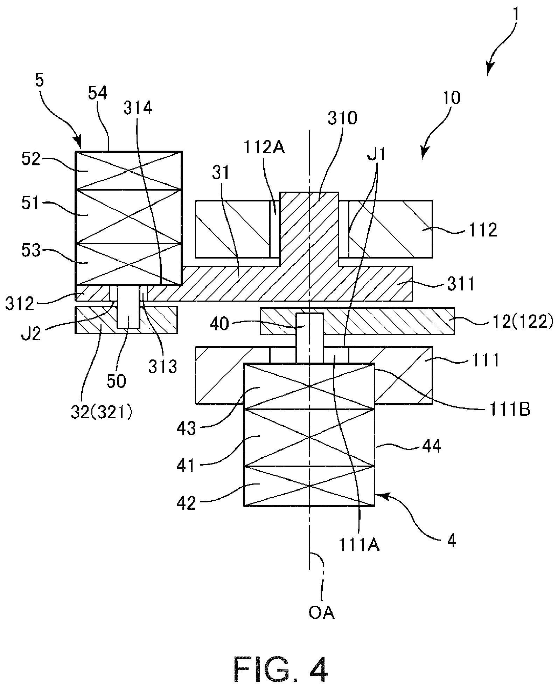

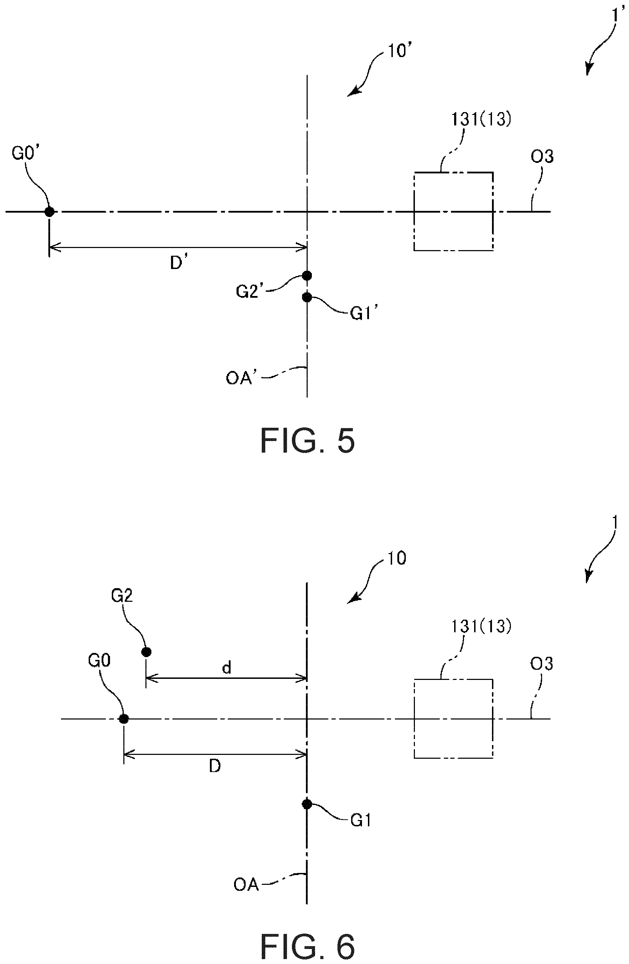

FIG. 1 is a diagram showing overall configuration of a robot according to a first embodiment of the present disclosure. FIG. 2 is a diagram showing operations of a robot arm and a linkage mechanism included in the robot shown in FIG. 1. FIG. 3 is a diagram showing operations of a robot arm and a linkage mechanism included in the robot shown in FIG. 1. FIG. 4 is a sectional view taken along the line A-A in FIG. 1. FIG. 5 is a pattern diagram showing the positional relationship between the first rotation axis and the centroid G1' and G2' of the first and second drive sources in the structure of the robot according to the related art. FIG. 6 is a pattern diagram showing a positional relationship between the first rotation axis and the centroid G1 and G2 of the first and second drive sources in the structure of the robot of the present disclosure.

Note that, hereinafter, for convenience of description, in the robot arm, toward a base 11 side in FIG. 1 is referred to as a "proximal end", and toward the opposite side, that is, toward a distal end portion 131 side of a second arm 13, is referred to as a "distal end".

Further, an up-down direction in FIG. 1 is referred to as a vertical direction, and a direction orthogonal to the vertical direction is referred to as "horizontal" or a "horizontal direction". For example, the direction perpendicular to the paper of FIG. 1 is the horizontal direction.

As shown in FIG. 1, a robot system 100 includes a robot 1 and a control device 3 for controlling the operation of each part of the robot 1.

First, the robot 1 will be described.

The robot 1 illustrated in FIG. 1 is a so-called palletizer robot that transports a package, and that includes the base 11, a robot arm 10 having a plurality of arms, a linkage mechanism 30, a first drive source 4, and a second drive source 5. Note that in FIG. 1, the first drive source 4 and the second drive source 5 are omitted.

An end effector configured to grip a load can be attached to the distal end portion of the robot arm 10. Note that the end effector may be a constituent element of the robot 1, and may not be a member separate from the robot 1, that is, a constituent element of the robot 1.

The base 11 is a support that rotatably supports the robot arm 10 and the linkage mechanism 30 at the proximal end side, and is fixed to a horizontal installation plane 8 such as a floor in a factory, for example. In the robot 1, the base 11 is electrically connected to the control device 3 via a relay cable. Note that the coupling between the robot 1 and the control device 3 is not limited to a wired coupling, and may be, for example, a wireless coupling. It may also be coupled via a network such as the Internet. Further, the control device 3 may be built-in the base 11.

In the present embodiment, the robot arm 10 includes a first arm 12 and the second arm 13, and the first arm 12 and the second arm 13 are coupled in this order from the side of the base 11. Note that the number of arms included in the robot arm 10 is not limited to two, but may be three or more. That is, a third arm, a fourth arm, a fifth arm, a sixth arm, or the like may be further coupled to the side of the distal end side of the second arm 13. The size, such as the total length, of each arm is not particularly limited and can be appropriately set.

The base 11 includes a base section 110, an installation section 111, an installation section 112, and a rotary section 113 that rotates the installation sections 111 and 112 around a vertical rotation axis O extending in the vertical direction. The base section 110 is a portion fixed to the installation plane 8 such as a floor. The rotary section 113 is mounted on the base section 110. The rotary section 113 is rotatable in both the forward direction and the reverse direction around the vertical rotation axis O as the rotation center with respect to the base section 110 by drive of a rotary section driving motor (not shown) installed inside the rotary section 113. The rotary section driving motor is electrically coupled to the control device 3 via a motor driver (not shown) installed inside the rotary section 113, and the control device 3 controls the energization condition of the motor driver, thereby controlling the operation of the motor for driving the rotary section, that is, the rotation direction, the rotation amount, the rotation speed, and the like.

As shown in FIG. 4, each of the installation section 111 and the installation section 112 has a plate shape whose thickness direction is the horizontal direction. The installation section 111 and the installation section 112 are arranged in parallel with each other so as to be spaced apart from each other in the horizontal direction, that is, in the axial direction of the first rotation axis OA.

The installation section 111 has a through hole 111A penetrating therethrough in the thickness direction thereof. A step portion 111B is formed on the inner peripheral surface of the through hole 111A. A first output shaft 40 of the first drive source 4 (to be described later) is inserted through the through hole 111A. A housing 44 of the first drive source 4 (to be described later) is fixed to the step portion 111B. The first output shaft 40 is fixed to a proximal end portion 122 of the first arm 12. Note that although the configuration having the step portion 111B is shown in FIG. 4, the present disclosure is not limited to this configuration, and the step portion 111B may be omitted.

The installation section 112 has a through hole 112A penetrating therethrough in the thickness direction thereof. The through hole 112A is formed coaxially with the through hole 111A. A shaft section 310 of a first link 31 (to be described later) is inserted into the through hole 112A. The shaft section 310 is rotatably mounted on the installation section 112 through a bearing (not shown), for example, in the through hole 112A.

The first arm 12 and the first link 31 are rotatable around the first rotation axis OA by the installation section 111 and the installation section 112. The through hole 111A, the first output shaft 40, the through hole 112A, and the shaft section 310 constitute a first joint J1.

As shown in FIG. 1, the installation section 111 and the installation section 112 are fixed to the upper portion of the rotary section 113, and rotate around the axis of the vertical rotation axis O as the rotary section 113 rotates. Thus, the robot arm 10 and the linkage mechanism 30 can be rotated around the vertical rotation axis O.

The first arm 12 has a distal end portion 121 and the proximal end portion 122, and the proximal end portion 122 is rotatably coupled to the installation section 111. A proximal end portion 132 of the second arm 13 is rotatably coupled to the distal end portion 121 of the first arm 12.

The second arm 13 has the distal end portion 131 and the proximal end portion 132, and the proximal end portion 132 is coupled to the distal end portion 121 of the first arm 12 so as to be rotatable about the second rotation axis OB. The first rotation axis OA and the second rotation axis OB both extend horizontally and are parallel to each other. For example, the end effector, the third arm, or the like (not shown) is coupled to the distal end portion 131 of the second arm 13.

Note that although not shown in the drawings, the end effector may have a configuration in which an attraction section is provided and a load or other work object is gripped by attraction of the attraction section. Note that the end effector is not limited to the above configuration, and may be, for example, a hand having a pair of gripping members capable of approaching and separating, or a tool such as a polishing machine, a grinding machine, a cutting machine, a spray gun, a laser beam irradiator, a driver, or a wrench.

The linkage mechanism 30 transmits the rotational force output from the second drive source 5 to the second arm 13, and has the first link 31, a second link 32, a third link 33, the first arm 12, the first joint J1, the second joint J2, the third joint J3, and the fourth joint J4. Note that the first arm 12 may not be a constituent element of the linkage mechanism 30.

In this case, for example, a fourth link parallel to the first arm 12 is fixed to the first arm 12. Instead of the first arm 12, the fourth link is a constituent element of the linkage mechanism 30.

The configuration of the linkage mechanism 30 will be described in detail with reference to FIGS. 1 and 4.

The first link 31 has an elongated shape and includes one end portion 311 and an other end portion 312. The shaft section 310 projecting in a direction orthogonal to the longitudinal direction of the first link 31 is fixedly or integrally formed on the one end portion 311 of the first link 31. The one end portion 311 of the first link 31 is coupled by the shaft section 310 to the installation section 112 of the base 11 so as to be rotatable about the first rotation axis OA extending horizontally. One end portion 321 of the second link 32 is coupled to the other end portion 312 of the first link 31 via the second joint J2 so as to be rotatable about an axis along the horizontal direction. The second joint J2 is constituted by a second output shaft 50 of the second drive source 5 and a through hole 313 formed in the first link 31. The second output shaft 50 is rotatably inserted into the through hole 313. The second output shaft 50 is fixed to the one end portion 321 of the second link 32.

The second link 32 has an elongated shape and has the one end portion 321 and an other end portion 322. The one end portion 321 of the second link 32 is coupled to the other end portion 312 of the first link 31 so as to be rotatable about an axis along the horizontal direction. The third link 33 is coupled to the other end portion 322 of the second link 32 via a third joint J3 so as to be rotatable about an axis along the horizontal direction.

The third link 33 has an elongated shape and includes one end portion 331 and an other end portion 332. The one end portion 331 of the third link 33 is coupled to the other end portion 322 of the second link 32 so as to be rotatable about an axis along the horizontal direction. The other end portion 332 of the third link 33 is fixed to the proximal end portion 132 of the second arm 13. The third link 33 is fixed to the proximal end portion 132 of the second arm 13 so as to extend on the extension of the proximal end side of the second arm 13. The distal end portion 121 of the first arm 12 is coupled to the other end portion 332 of the third link 33 via a fourth joint J4 so as to be rotatable about a shaft along the horizontal direction. Note that although present configuration shows that the third link 33 is separate from the second arm 13, the third link 33 may be integral with the second arm 13.

Note that as described above, the first joint J1 is constituted by the through hole 111A of the installation section 111, the first output shaft 40 of the first drive source 4, the through hole 112A of the installation section 112, and the shaft section 310 of the first link 31.

In such the linkage mechanism 30, the first link 31 and the third link 33 have the same length and are parallel to each other, and the second link 32 and the first arm 12 have the same length and are parallel to each other. Even when the posture of the first arm 12 and the second arm 13, that is, the rotation angles thereof are changed, the first link 31 and the third link 33 are maintained in a parallel state, and the second link 32 and the first arm 12 are maintained in a parallel state.

As shown in FIG. 4, the first drive source 4 includes the first output shaft 40 that outputs a rotational force for rotating the first arm 12, a motor 41, an encoder 42, a speed reducer 43, and the housing 44.

The motor 41, the encoder 42, and the speed reducer 43 are housed in the housing 44.

The motor 41, the encoder 42, and the speed reducer 43 are fixed to the housing 44.

The first output shaft 40 protrudes from the housing 44.

The motor 41 is electrically coupled to the control device 3 via a motor driver (not shown), and the operation of the motor 41 is controlled by the control device 3 controlling energization conditions for the motor driver. Under the control of the control device 3, the motor 41 can rotate in both forward and reverse directions, and the first output shaft 40 rotates in accordance with the rotational direction and the rotational speed of the motor 41. The control device 3 controls the rotation speed of the motor 41, that is, the direction of rotation, the amount of rotation, and the angular velocity.

The output shaft of the motor 41 is coupled to the input side of the speed reducer 43, and the speed reducer 43 has a function of reducing the rotational speed of the motor 41. In the present embodiment, the output shaft of the speed reducer 43 is the first output shaft 40 of the first drive source 4. However, the present disclosure is not limited to this configuration, and the speed reducer 43 may be omitted. In this case, the output shaft of the motor 41 serves as the first output shaft 40 of the first drive source 4.

The encoder 42 detects a rotation angle of the motor 41, that is, a rotation amount including forward and reverse rotation and an angular velocity, and transmits the information to the control device 3. Thus, the control device 3 can control the operation of the motor 41 based on the information from the encoder 42. As the encoder 42, for example, a rotary encoder can be used.

In the first drive source 4, the housing 44 is fixed to the installation section 111 of the base 11, and the first output shaft 40 is fixed to the proximal end portion 122 of the first arm 12. In the first drive source 4, the housing 44 is fixed to the step portion 111B in a state where the first output shaft 40 is inserted into the through hole 111A of the installation section 111. The first arm 12 is fixed to a portion of the first output shaft 40 protruding from the through hole 111A.

According to such a configuration, for example, in a case where the second joint J2 is rotatable and the first link 31 is fixed not to rotate, when the motor 41 is driven and the first output shaft 40 rotates in a predetermined direction, the first arm 12 fixed to the first output shaft 40 rotates around the first rotation axis OA with respect to the installation section 111 as shown by a broken line in FIG. 2. At this time, the second arm 13 coupled to the distal end portion 121 of the first arm 12 is also displaced in the lateral direction in FIG. 2 together with the distal end portion 121 of the first arm 12. Due to this displacement, the third link 33 fixed to the second arm 13 is also displaced. Since the first link 31, the second link 32, and the third link 33 are rotatably coupled to each other, the first link 31, the second link 32, and the third link 33 rotate with each other as the third link 33 is displaced. As a result, the entire linkage mechanism 30 is deformed such that the first link 31 and the third link 33 maintain a parallel state while the first arm 12 and the second link 32 maintain a parallel state.

The second drive source 5 includes the second output shaft 50 that outputs a rotational force for rotating the second link 32, a motor 51, an encoder 52, a speed reducer 53, and a housing 54.

The motor 51, the encoder 52, and the speed reducer 53 are housed in the housing 54.

The motor 51, the encoder 52, and the speed reducer 53 are fixedly installed with respect to the housing 54. The second output shaft 50 protrudes from the housing 54.

The motor 51 is electrically coupled to the control device 3 through a motor driver (not shown), and the control device 3 controls conditions for energizing the motor driver, thereby controlling the operation of the motor 51. Under the control of the control device 3, the motor 51 can rotate in both the forward and reverse directions, and the second output shaft 50 rotates in accordance with the rotational direction and the rotational speed of the motor 51. The control device 3 controls a rotation speed of the motor 51, that is, a rotation direction, a rotation amount, and an angular velocity.

The output shaft of the motor 51 is coupled to the input side of the speed reducer 53, and the speed reducer 53 has a function of reducing the rotational speed of the motor 51. In the present embodiment, the output shaft of the speed reducer 53 is the second output shaft 50 of the second drive source 5. However, the present disclosure is not limited to this configuration, and the speed reducer 53 may be omitted. In this case, the output shaft of the motor 51 serves as the second output shaft 50 of the second drive source 5.

The encoder 52 detects a rotation angle of the motor 51, that is, a rotation amount including forward and reverse rotation and an angular velocity, and transmits the information to the control device 3. Accordingly, the control device 3 can control the operation of the motor 51 based on the information from the encoder 52. As the encoder 52, for example, a rotary encoder can be used.

In the second drive source 5, the housing 54 is fixed to the other end portion 312 of the first link 31, and the second output shaft 50 is fixed to the one end portion 321 of the second link 32. Therefore, the second drive source 5 is disposed at a position shifted from the first drive source 4 in the longitudinal direction of the first link 31.

In the second drive source 5, the housing 54 is fixed to a step portion 314 in a state where the second output shaft 50 is inserted into the through hole 313 of the first link 31. The second link 32 is fixed to a portion of the second output shaft 50 protruding from the through hole 313.

With such a configuration, when the motor 51 is driven and the second output shaft 50 rotates in a predetermined direction, the second link 32 rotates with respect to the first link 31 and is displaced in the longitudinal direction of the second link 32, as indicated by a broken line in FIG. 3. At this time, since the one end portion 331 of the third link 33 coupled to the other end portion 322 of the second link 32 is displaced in the vertical direction in FIG. 3, the third link 33 and the second arm 13 fixed to the third link 33 are displaced so as to rotate around the second rotation axis OB. Since the first link 31, the second link 32, and the third link 33 are rotatably coupled to each other, the respective links rotate with each other as the second link 32 and the third link 33 are displaced. As a result, the entire linkage mechanism 30 is deformed such that the first link 31 and the third link 33 maintain a parallel state while the first arm 12 and the second link 32 maintain a parallel state.

Since the linkage mechanism 30 is deformed so as to maintain the parallelogram shape or the rectangular shape, the second arm 13 can be rotated, and when the first arm 12 is rotated, smooth movement of the robot arm 10 can be realized without hindering the rotation.

As described above, by driving the first drive source 4, the second arm 13 is displaced in the longitudinal direction thereof, and by driving the second drive source 5, the second arm 13 rotates about the second rotation axis OB. Further, by driving the above-described motor (not shown), the robot arm 10 and the linkage mechanism 30 are rotated about the vertical rotation axis O. By appropriately combining the rotation of the robot arm 10 around the vertical rotation axis O, the displacement of the second arm 13 in the longitudinal direction, and the rotation of the second arm 13 around the second rotation axis OB, it is possible to move the distal end portion 131 of the second arm 13 and the end effector or the like attached thereto to a desired position in the workspace.

Hereinafter, a detailed description will be given with reference to FIG. 5 showing a structure in the related art and FIG. 6 showing a structure of the present embodiment.

First, the structure will be described, the structure shows a robot 1' of the related art. The reference numerals in FIG. 5 to which an apostrophe (') is added correspond to the same reference numerals in FIG. 6.

In the related art, as shown in FIG. 5, when viewed from the vertical direction, the centroid G1' of the drive source corresponding to the first drive source 4 and the centroid G2' of the drive source corresponding to the second drive source 5 are both located on the first rotation axis OA' corresponding to the first rotation axis OA. That is, the centroid G1' and the centroid G2' are located at the base joint of a robot arm 10' corresponding to the robot arm 10, that is, in the vicinity of the proximal end portion. Therefore, in order to balance the weights of the robot arm 10' and, for example, a weight coupled to the base so as to be positioned on the proximal end side of the base, it is necessary to set the distance D' between the centroid G0' of the weight and the first rotation axis OA' to be sufficiently large or to make the weight sufficiently heavy.

As a result, in the related art, the entire robot 1' tends to be large.

Next, the structure of the robot 1 will be described.

As shown in FIG. 6, when viewed from the vertical direction, the centroid G1 of the first drive source 4 is located on the first rotation axis OA, the first rotation axis OA is located between the centroid G2 of the second drive source 5 and the distal end portion 131 of the second arm 13, that is, on the left side of the first rotation axis OA in the figure. That is, the second drive source 5 also functions as a weight for balancing the weight of the robot arm 10. For example, when a load is gripped by the end effector provided at the distal end portion of the robot arm 10, the robot arm 10 may be inclined. However, the weight of the robot arm 10 can be balanced by the second drive source 5. As a result, the size of the robot 1 can be reduced. This also contributes to the weight reduction of the entire robot 1. Since the rotation radius of the linkage mechanism 30 when the robot arm 10 is rotated around the vertical rotation axis O becomes small, there is also an advantage that the working area of the robot arm 10 can be secured more widely.

Note that in this embodiment, the first rotation axis OA is located between the centroid G2 of the second drive source 5 and the distal end portion 131 of the second arm 13, but the present disclosure is not limited to this, the first rotation axis OA may be located between the centroid G1 of the first drive source 4 and the distal end portion 131 of the second arm 13. As will be described later, the first rotation axis OA may be located between both the centroid G1 of the first drive source 4 and the centroid G2 of the second drive source 5 and the distal end portion 131 of the second arm 13.

As shown in FIG. 6, when viewed from the vertical direction, the first drive source 4 is located on one side of the central axis O3 of the second arm 13, that is, on the lower side in FIG. 6, and the second drive source 5 is located on the other side of the central axis O3 of the second arm 13, that is, on the upper side in FIG. 6.

In other words, the central axis O3 of the second arm 13 is located between the first drive source 4 and the second drive source 5. More specifically, when viewed from the vertical direction, the central axis O3 of the second arm 13 is located between the centroid G1 of the first drive source 4 and the centroid G2 of the second drive source 5. This improves the balance of weights on both sides of the central axis O3 of the second arm 13. Therefore, the operation of the robot arm 10 can be performed more stably and safely.

The ratio d/D of the distance D between the centroid G0 and the first rotation axis OA and the distance d between the centroid G2 and the first rotation axis OA is not particularly limited, but is desirably not less than 0.2 and not more than 1, and more desirably not less than 0.3 and not more than 0.7. Thus, the above-mentioned effect can be exhibited more remarkably. Note that the value of d/D is not limited to the above, and may be d/D > 1.

The robot 1 includes the base 11, the first arm 12 coupled to the base 11 so as to be rotatable about the first rotation axis OA along the horizontal direction, the second arm 13 having the distal end portion 131 and the proximal end portion 132, the proximal end portion 132 being coupled to the first arm 12 so as to be rotatable about a the second rotation axis OB parallel to the first rotation axis OA, the first drive source 4 having the first output shaft 40 for outputting a rotational force for rotationally driving the first arm 12, the second drive source 5 having the second output shaft 50 for outputting rotational force for rotationally driving the second arm 13, and the linkage mechanism 30 coupled to a distal end side of a first arm 23 via a plurality of links with a proximal end side of the first arm 23 as a starting point and transmitting rotational force generated by the second drive source 5 to the second arm 13. Further, in the robot 1, when viewed from the vertical direction, the first rotation axis OA is positioned between the distal end portion 131 of the second arm 13 and at least one of the centroid G1 of the first drive source 4 and the centroid G2 of the second drive source 5. Thus, the second drive source 5 can function as a weight, and there is no need to add a weight. Therefore, the size of the robot 1 can be reduced.

As described above, the linkage mechanism 30 has the first link 31, the second link 32, the third link 33, the first joint J1 rotatably coupling together the first arm 12 and the first link 31, the second joint J2 rotatably coupling together the first link 31 and the second link 32, the third joint J3 rotatably coupling together the second link 32 and the third link 33, and the fourth joint J4 rotatably coupling together the third link 33 and the first arm 12. Accordingly, since the linkage mechanism 30 can efficiently and reliably transmit rotational force output from the second drive source 5 to the second arm 13, the operation of the robot arm 10 can be stably performed with high reproducibility.

As described above, the second drive source 5 is fixed to the first link 31, the second output shaft 50 is fixed to the second link 32, and the second joint J2 has the second output shaft 50 and the through hole 313 which is formed in the first link 31 and is a first insertion hole through which the second output shaft 50 is rotatably inserted. By thus constituting the second joint J2 by the second output shaft 50 and the through hole 313, the structure of the second joint J2 can be simplified, and the function of the second joint J2 can be sufficiently exhibited.

As described above, when viewed from the vertical direction, the central axis O3 of the second arm 13 is located between the first drive source 4 and the second drive source 5. This improves the balance of weights on both sides of the central axis O3 of the second arm 13.

### SECOND EMBODIMENT

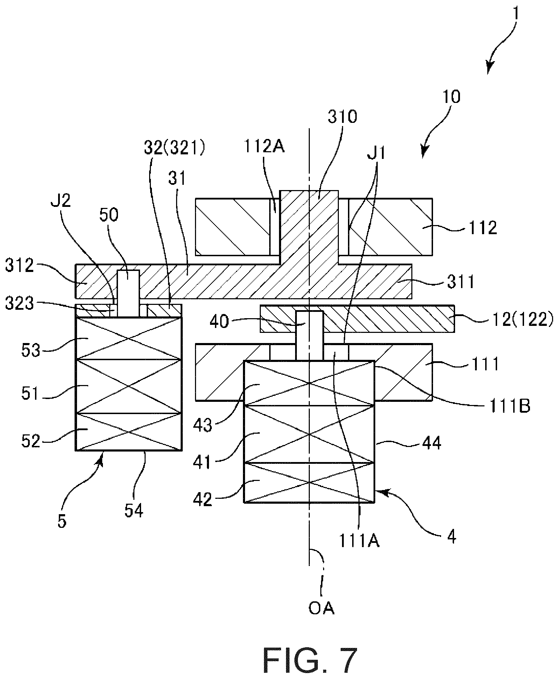

FIG. 7 is a sectional view corresponding to the sectional view taken along the line A-A in FIG. 1 in the second embodiment of the robot according to the present disclosure.

Hereinafter, the second embodiment of the robot according to the disclosure will be described with reference to these drawings. Hereinafter, differences from the first embodiment will be mainly described, and the description of the same matters will be omitted.

As shown in FIG. 7, the housing 54 of the second drive source 5 is fixed to the one end portion 321 of the second link 32, and the second output shaft 50 is fixed to the other end portion 312 of the first link 31. Specifically, a through hole 323, which is a second insertion hole, is formed in the second link 32, and the second output shaft 50 is rotatably inserted into the through hole 232. The second joint J2 includes the second output shaft 50 and the through hole 323.

According to such a configuration, as in the first embodiment, it is possible to reduce the size of the robot 1, and the housing 44 and the housing 54 are positioned to one side with respect to the central axis O3, that is, to one side of the robot 1. That is, both the first drive source 4 and the second drive source 5 are positioned on the lower side of FIG. 7 with respect to the first arm 12. As a result, for example, when the operation of such as maintenance or repair of the first drive source 4 and the second drive source 5 is performed, the operator can access from the same side regardless of which drive source the operation is performed on. Therefore, it is possible to easily operate such as maintenance and repair of the first drive source 4 and the second drive source 5.

As described above, the second drive source 5 is fixed to the second link 32, the second output shaft 50 is fixed to the first link 31, and the second joint J2 has the second output shaft 50 and the through hole 323 which is a second insertion hole formed in the second link 32 and through which the second output shaft 50 is rotatably inserted. As a result, the structure of the second joint J2 can be simplified, and the first drive source 4 and the second drive source 5 can be arranged on one side of the first arm 12, so that the workability in the operation such as maintenance and repair can be enhanced.

### THIRD EMBODIMENT

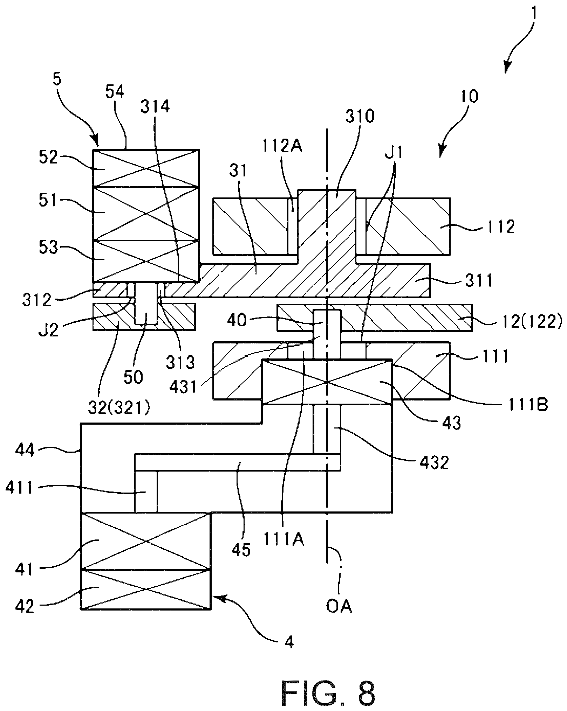

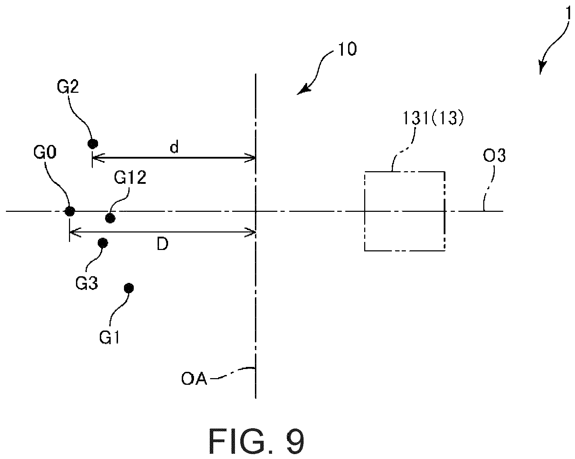

FIG. 8 is a sectional view corresponding to the sectional view taken along the line A-A in FIG. 1 in the third embodiment of the robot according to the present disclosure. FIG. 9 is a pattern diagram showing the positional relationship between the first rotation axis and the centroid G1 and G2 of the first and second drive sources in the structure of the robot shown in FIG. 8.

Hereinafter, the third embodiment of the robot according to the disclosure will be described with reference to these drawings. Hereinafter, differences from the first embodiment will be mainly described, and the description of the same matters will be omitted.

As shown in FIGS. 8 and 9, the first drive source 4 includes the speed reducer 43, the motor 41 and the encoder 42 which are disposed at positions separated from the speed reducer 43 in a direction away from the first rotation axis OA, a power transmission section 45, and the housing 44. The motor 41 and the encoder 42 are arranged coaxially.

The motor 41, the encoder 42, the speed reducer 43, and the power transmission section 45 are housed in the housing 44. The motor 41, the encoder 42, and the speed reducer 43 are fixedly installed with respect to the housing 44. The first output shaft 40 protrudes from the housing 44.

The speed reducer 43 is fixed to the step portion 111B of the through hole 111A in a state of being housed in the housing 44. An output shaft 431 of the speed reducer 43 is the first output shaft 40 and is fixed to the proximal end portion 122 of the first arm 12.

The first rotation axis OA is located between the portion where both the motor 41 and the encoder 42 are located and the distal end portion 131 of the second arm 13. The motor 41, the encoder 42, and the speed reducer 43 are fixed to the installation section 111 of the base 11 while maintaining their positional relationship in a state of being fixed to the housing 44.

An output shaft 411 of the motor 41 and an input shaft 432 of the speed reducer 43 are coupled to each other via the power transmission section 45. The power transmission section 45 has a function of transmitting the rotational force output by the output shaft 411 of the motor 41 to the input shaft 432 of the speed reducer 43.

In the present embodiment, the power transmission section 45 includes a sprocket wheel fixed to the output shaft 411, a sprocket wheel fixed to the input shaft 432, and a chain wound between the sprocket wheels.

As another configuration of the power transmission section 45, a gear fixed to the output shaft 411, a gear fixed to the input shaft 432, and an endless cogged belt which is wound between the gears and has teeth meshing with the gears on the inner peripheral side may be mentioned.

As yet another configuration of the power transmission section 45, a gear train including a plurality of gears meshed with each other may be mentioned.

When the output shaft 411 is rotated in a predetermined direction by drive of the motor 41, the rotational force is transmitted to the input shaft 432 of the speed reducer 43 via the power transmission section 45, and is decelerated by the speed reducer 43, so that the output shaft 431, which is the first output shaft 40, is rotated. The rotation of the first output shaft 40 causes the first arm 12 fixed to the first output shaft 40 to rotate.

According to the third embodiment having such a configuration, since the first rotation axis OA is located between the distal end portion 131 of the second arm 13 and both the motor 41 and the encoder 42, as shown in FIG. 9 the first rotation axis OA can be located between the centroid G1 of the first drive source 4 and the distal end portion 131 of the second arm 13. That is, not only the centroid G2 but also the centroid G1 and the distal end portion 131 of the second arm 13 can be located on the opposite side of the first rotation axis OA. Therefore, the size of the robot 1 can be further reduced.

As described above, in the present embodiment, the first rotation axis OA is located between the portion where both the centroid G1 and the centroid G2 are located and the distal end portion 131 of the second arm 13. Thus, the size of the robot 1 can be further reduced.

In the present embodiment, when viewed from the vertical direction, the central axis O3 of the second arm 13 is located between the first drive source 4 and the second drive source 5. This improves the balance of weights on both sides of the central axis O3 of the second arm 13.

Note that in this embodiment, the installation direction, installation structure, and the like of the second drive source 5 may be the same as those in the second embodiment. That is, the second drive source 5 is fixed to the second link 32, the second output shaft 50 is fixed to the first link 31, and the second joint J2 has the second output shaft 50 and the through hole 323 which is formed in the second link 32 and is a second insertion hole through which the second output shaft 50 is rotatably inserted. Thus, the same effect as described above can be obtained. That is, the structure of the second joint J2 can be simplified, and the first drive source 4 and the second drive source 5 can be arranged on one side of the first arm 12, so that the workability in the work such as maintenance and repair can be enhanced.

Next, modifications of the present disclosure will be described.

### First modification

As described above, in the present disclosure, the first rotation axis OA is located between the distal end portion 131 of the second arm 13 and at least one of, desirably both of, the centroid G1 and the centroid G2. When the present disclosure is viewed from another viewpoint, it can be said that the first rotation axis OA is located between the distal end portion 131 of the second arm 13 and at least one of, desirably both of, the first output shaft 40 of the first drive source 4 and the second output shaft 50 of the second drive source 5 (see FIGS. 4, 6, 7, and 8). In this case also, the same effect as the effect of the present disclosure described above is exerted.

### Second modification

When the disclosure is viewed from still another viewpoint, it can be said that the first rotation axis OA is located between the distal end portion 131 of the second arm 13 and at least one of, desirably both of, the motor 41 of the first drive source 4 and the motor 51 of the second drive source 5 (see FIGS. 4, 6, 7, and 8). In this case also, the same effect as the effect of the present disclosure described above is exerted.

### Third modification

When the present disclosure is viewed from still another viewpoint, when the first drive source 4 and the second drive source 5 are regarded as one drive source section and the centroid of the entire drive source section is defined as a centroid G3, it can be said that the first rotation axis OA is located between the centroid G3 and the distal end portion 131 of the second arm 13 (see FIG. 9). In this case also, the same effect as the effect of the present disclosure described above is exerted.

### Fourth modification

Assuming that the midpoint of a line segment coupling the centroid G1 and the centroid G2 is defined as the centroid G12, the centroid G12 is used instead of the centroid G3 in the third modification. That is, in the present disclosure, the first rotation axis OA can be located between the centroid G12 and the distal end portion 131 of the second arm 13 (see FIG. 9). In this case also, the same effect as the effect of the present disclosure described above is exerted.

### Fifth modification

Note that if the weight balance of the robot arm 10 cannot be sufficiently maintained even with the above-described embodiments or variations, a weight may be added. In this case, the weight can be disposed by extending the first link 31 to the side opposite to the second arm 13. However, the weight balance corresponding to a part of the load applied to the distal end side of the robot arm 10 by the second drive source 5 has already been achieved. Accordingly, the weight of the weight, that is, the volume can be reduced by the weight of the second drive source 5 as compared with the related art, or the length of the first link 31 extending to the side opposite to the second arm 13 can be shortened. As a result, the size of the robot 1 can be reduced. This also contributes to the weight reduction of the entire robot 1. Further, since the rotation radius of the weight when the robot arm 10 is rotated around the vertical rotation axis O becomes smaller than that in the related art, there is also an advantage that the working area of the robot arm 10 can be secured more widely.

The first to fourth modifications as described above can be applied to the configurations described or illustrated in the first to third embodiments described above.

Hereinabove, the robot according to the disclosure has been described with reference to the embodiments and the modification examples illustrated in the drawings, but the disclosure is not limited thereto. The configurations in each embodiment and each modification can be appropriately combined and replaced. In addition, an arbitrary configuration may be added to the robot. In addition, each section of the robot can be replaced with an arbitrary configuration that can exhibit the same function.

## Claims

1. A robot comprising:
a base;
a first arm coupled to the base so as to be rotatable about a first rotation axis along a horizontal direction;
a second arm including a distal end portion and a proximal end portion, the proximal end portion being coupled to the first arm so as to be rotatable about a second rotation axis, which is parallel to the first rotation axis;
a first drive source including a first output shaft for outputting rotational force for rotationally driving the first arm;
a second drive source including a second output shaft for outputting rotational force for rotationally driving the second arm; and
a linkage mechanism that is coupled to a distal end side of the first arm via a plurality of links with a proximal end side of the first arm as a starting point and that transmits rotational force generated by the second drive source to the second arm, wherein
when viewed from the vertical direction, the first rotation axis is located between the distal end portion of the second arm and at least one of a centroid G1 of the first drive source or a centroid G2 of the second drive source.

2. The robot according to claim 1, wherein
the linkage mechanism includes
a first link,
a second link,
a third link,
a first joint rotatably coupling together the first arm and the first link,
a second joint rotatably coupling together the first link and the second link,
a third joint rotatably coupling together the second link and the third link, and
a fourth joint rotatably coupling together the third link and the first arm.

3. The robot according to claim 2, wherein
the second drive source is fixed to the first link,
the second output shaft is fixed to the second link, and
the second joint includes
the second output shaft and
a first insertion hole that is formed in the first link and through which the second output shaft is rotatably inserted.

4. The robot according to claim 1, wherein
when viewed from the vertical direction, a central axis of the second arm is located between the first drive source and the second drive source.

5. The robot according to claim 2, wherein
the second drive source is fixed to the second link,
the second output shaft is fixed to the first link, and
the second joint includes the second output shaft and a second insertion hole formed in the second link and through which the second output shaft is rotatably inserted.

6. The robot according to claim 1, wherein
the first rotation axis is located between the distal end portion of the second arm and both the centroid G1 and the centroid G2.
